# EUROPÄISCHE PATENTSCHRIFT

(11) **EP 2 698 294 B1**
(45) Veröffentlichungstag und Bekanntmachung des Hinweises auf die Patenterteilung: **11.03.2015**
(21) Anmeldenummer: 13003652.8
(22) Anmeldetag: 20.07.2013
(51) Int. Cl.: B60S 3/04, B62D 15/00, B62D 15/02, G05D 1/00, B62D 1/28

(54) **Verfahren zum autonomen Fahren in einer Waschstraße und Kraftfahrzeug**
Method for autonomous driving in a car wash module and motor vehicle
Procédé de conduite autonome dans une voie de lavage et véhicule automobile

(30) Priorität: 17.08.2012 DE 102012016432
(43) Veröffentlichungstag der Anmeldung: 19.02.2014
(73) Patentinhaber: AUDI AG, 85045 Ingolstadt (DE)
(72) Erfinder: Stadler, Michael, 85110 Arnsberg (DE)
(74) Vertreter: Thielmann, Frank

(56) Entgegenhaltungen:
- EP-A2- 1 480 097
- US-A1- 2010 186 778

## Beschreibung

Die vorliegende Erfindung betrifft ein Verfahren zum autonomen Fahren eines Kraftfahrzeugs in einer Waschstraße. Darüber hinaus betrifft die vorliegende Erfindung ein entsprechendes Kraftfahrzeug zum autonomen Fahren in einer Waschstraße.

Waschstraßen für Kraftfahrzeuge erfreuen sich immer größerer Beliebtheit, da das Kraftfahrzeug in verhältnismäßig kurzer Zeit außen vollständig automatisch gereinigt werden kann. Der Fahrer muss dabei in keiner Reinigungsphase selbst Hand anlegen.

Es gibt verschiedene Typen von Waschstraßen. Bei einem Typ fährt der Fahrer das Fahrzeug in die Waschstraße, stellt das Fahrzeug ab, verlässt es gegebenenfalls, der Wasch- und anschließende Trocknungsvorgang beginnen und der Fahrer fährt das Fahrzeug am Ende wieder aus der Waschstraße. Bei einem andern Typ wird das Fahrzeug automatisch von einem Waschraum in einen Trocknungsraum mit einer Schleppkette gezogen, wobei sich das Fahrzeug im Leerlauf befinden muss. Bei einem noch weiteren Typ muss der Fahrer nach dem Waschvorgang das Fahrzeug von einem Waschraum in einen Trocknungsraum fahren.

In jedem Fall muss der Fahrer das Kraftfahrzeug sehr exakt in eine fest vorgegebene Waschposition in der Waschstraße fahren. Meist sind hierzu Begrenzungsschienen vorgegeben, die eine seitliche Position des Fahrzeugs limitieren. In Fahrtrichtung deutet oft ein optisches Signal an, dass die richtige Waschposition erreicht ist. Gegebenenfalls muss etwas zurückgefahren werden. In einigen Fällen ist es, wie oben angedeutet, auch notwendig, dass der Fahrer das Fahrzeug von einer Waschposition in einem Waschraum zu einer Trocknungsposition in einem Trocknungsraum weiterfährt. Auch dazu muss der Fahrer einen sehr schmalen Korridor einhalten und exakt zu einer festgelegten Position vorfahren. Dieses Fahren in Waschstraßen ist für die meisten Fahrer zumindest unkomfortabel, für manche ist es nicht möglich.

In der Druckschrift DE 10 2005 058 628 A1 ist beschrieben, dass für Fahrzeuge und mobile Systeme eine Vielzahl von Lösungen für Fahrerassistenzsysteme und sogar für autonome Fahrsysteme bekannt sind. Übliche Vorrichtungen verwenden GPS-Systeme, Transponder-IDs oder andere Sensoriksysteme zur Positionsbestimmung und/oder zur Kollisionsvermeidung mit anderen Fahrzeugen. Zur verlässlichen Positionsbestimmung für sich autonom bewegende Systeme wird ein Navigationssystem und ein Verfahren für ein Mobil mit N unabhängigen Sensoreinrichtungen zur Bestimmung von N unabhängigen Ortsdatensätzen des Mobils in einem Weltkoordinatensystem und mit einer Auswerteeinrichtung, die programmtechnisch oder schaltungstechnisch zur Verknüpfung der N Ortsdatensätze des Mobils zur Bildung eines Ergebnis-Ortsdatensatzes ausgebildet ist, dargestellt. Dadurch können sicherheitsrelevante Vorgaben für das Rangieren, Einfahren, Durchfahren und Andocken bezogen auf immobile bekannte Einrichtungen wie Laderampen, Gebäudeeinfahrten, Waschstraßen, Tankstellen und dergleichen vorgegeben und sicher eingehalten werden. EP 1 480 097 A2 beschreibt ein Verfahren zum autonomen Fahren eines Kraftfahrzeugs in einen Waschstraße.

Die Aufgabe der vorliegenden Erfindung besteht darin, das Befahren von Waschstraßen durch Kraftfahrzeuge komfortabler zu gestalten.

Erfindungsgemäß wird diese Aufgabe gelöst durch ein Verfahren zum autonomen Fahren eines Kraftfahrzeugs in einer Waschstraße, Detektieren eines Korridors der Waschstraße, Detektieren einer Fahrzeugposition und Fahrzeugorientierung des Kraftfahrzeugs relativ zu dem Korridor der Waschstraße, automatisches Einfahren des Kraftfahrzeugs in die Waschstraße anhand der Fahrzeugposition und der Fahrzeugorientierung, automatisches Stoppen des Kraftfahrzeugs in einer Waschposition, Empfangen oder Ermitteln eines Endesignals, das ein Ende eines Arbeitsschritts der Waschstraße signalisiert, durch das Kraftfahrzeug, und automatisches Ausfahren des Kraftfahrzeugs aus der Waschstraße ausgelöst durch das Endesignal.

Darüber hinaus wird erfindungsgemäß bereitgestellt ein Kraftfahrzeug zum autonomen Fahren in einer Waschstraße umfassend eine Detektoreinrichtung zum Detektieren eines Korridors der Waschstraße sowie einer Fahrzeugposition und Fahrzeugorientierung des Kraftfahrzeugs relativ zu dem Korridor der Waschstraße, eine Steuereinrichtung zum automatischen Einfahren des Kraftfahrzeugs in die Waschstraße anhand der Fahrzeugposition und Fahrzeugorientierung sowie zum automatischen Stoppen des Kraftfahrzeugs in einer Waschposition und einer Einrichtung zum Empfangen oder Ermitteln eines Endesignals, das ein Ende eines Arbeitsschritts der Waschstraße signalisiert, wobei die Steuereinrichtung zum automatischen Ausfahren des Kraftfahrzeugs aus der Waschstraße ausgelöst durch das Endesignal ausgebildet ist.

In vorteilhafter Weise ist es somit möglich, dass ein Kraftfahrzeug vollkommen automatisch in eine Waschstraße einfährt, dort während des Waschvorgangs und ggf. Trocknungsvorgangs bleibt und anschließend wieder vollkommen automatisch vorwärts oder rückwärts aus der Waschstraße heraus fährt. Dieses vollständig automatische Fahren lässt sich als autonomes Fahren in der Waschstraße bezeichnen, wobei der Fahrer entweder das Auto verlässt und das Fahrzeug ohne Fahrer selbst fährt, oder der Fahrer einfach sitzen bleibt und sich fahren lässt.

Vorzugsweise ist das Verfahren durch Betätigen eines mobilen Endgeräts steuerbar. Dies bedeutet, dass zumindest das autonome Fahren in der Waschstraße durch das mobile Endgerät (z. B. Mobiltelefon) getriggert bzw. angestoßen wird. Alternativ kann das autonome Fahren auch beispielsweise durch Knopfdruck, durch eine Spracheingabe oder auch durch automatsches Erkennen einer Waschstraße aktiviert werden.

In einer Ausführungsform erfolgt vor dem Detektieren des Korridors der Waschstraße ein Aussenden eines Orientierungssignals durch die Waschstraße, anhand dessen das Kraftfahrzeug die Waschstraße automatisch ortet und/oder identifiziert. Ein solches Orientierungssignal dient also dazu, dass das Fahrzeug bereits aus größerer Distanz die Waschstraße automatisch erkennen und ihren Ort feststellen kann. Dadurch können bereits vor der Waschstraße automatische Lenk- und Steuermanöver durchgeführt werden.

Entsprechend einer Weiterbildung ist vorgesehen, den Korridor der Waschstraße anhand von fest platzierten Orientierungselementen in der Waschstraße zu detektieren. Derartige Orientierungselemente können vorgegebene Eigenschaften besitzen, so dass sie von dem Kraftfahrzeug leichter und zuverlässiger ermittelt werden können.

Des Weiteren kann zur Detektion der Fahrzeugposition bzw. Fahrzeugorientierung relativ zu dem Korridor die Sensorik eines Parkassistentsystems des Kraftfahrzeugs verwendet werden. Hierdurch ist es möglich, die Sensorik eines Parkassistentsystems auch für andere Verwendungszwecke zu nutzen. Andernfalls müsste eine zusätzliche teure Sensorik für das autonome Fahren in einer Waschstraße im Kraftfahrzeug vorgesehen werden.

Weiterhin ist es besonders vorteilhaft, wenn vor dem autonomen Einfahren in die Waschstraße dem Fahrer die Möglichkeit des autonomen Fahrens mitgeteilt wird, so dass er einen entsprechenden Automatikmodus aktivieren kann. Dieses Mitteilen der Möglichkeit des autonomen Fahrens kann beispielsweise akustisch oder optisch erfolgen. Vorteil davon ist, dass der Fahrer zuverlässig erfährt, ab wann er das Kraftfahrzeug dem Automatikmodus übergeben kann.

Weiterhin ist es von Vorteil, wenn bei dem automatischen Stoppen des Kraftfahrzeugs in der Waschposition automatisch das Getriebe des Kraftfahrzeugs in eine Leerlaufstellung gebracht und der Motor des Kraftfahrzeugs ausgeschaltet wird. Damit muss sich der Fahrer nicht um den Triebstrang des Kraftfahrzeugs kümmern und es kann ein vollkommen autonomer Betrieb des Fahrzeugs in der Waschstraße gewährleistet werden.

Darüber hinaus kann das Kraftfahrzeug auch ein Fahrsignal von der Waschstraße empfangen und dadurch ausgelöst automatisch von der Waschposition in eine andere Bearbeitungsposition fahren. Dies ist beispielsweise dann von Vorteil, wenn die Waschstraße aus einem Waschraum und einem Trocknungsraum besteht und das Kraftfahrzeug nach dem Waschen von der Waschposition im Waschraum in eine Trocknungsposition in dem Trockenraum automatisch bewegt werden soll.

Ferner kann bei oder nach dem automatischen Ausfahren aus der Waschstraße eine Nachricht an ein Ausgabegerät zur Information eines Fahrers des Kraftfahrzeug über dessen Zustand gesendet werden. Dies ist besonders dann von Vorteil, wenn der Fahrer das Kraftfahrzeug vor der Einfahrt in die Waschstraße verlassen hat und das Fahrzeug die Waschstraße autonom ohne Fahrer durchfährt. Der Fahrer muss sich dann nicht in unmittelbarer Nähe der Waschstraße befinden, sondern kann die Nachricht auch auf einem beispielsweise in einem Aufenthaltsraum oder Restaurant befindlichen Bildschirm oder aber auch beispielsweise auf einem Mobiltelefon oder einem anderen mobilen Ausgabegerät empfangen.

Die oben angesprochenen Verfahrensmerkmale lassen sich mit entsprechend ausgebildeten Mitteln auch in dem beanspruchten Kraftfahrzeug realisieren.

Die vorliegende Erfindung wird nun anhand der beigefügten Zeichnungen näher erläutert, in denen zeigen:
- Fig. 1: schematisch einen erfindungsgemäßen Verfahrensablauf und
- Fig. 2: eine Skizze einer Waschstraße, die autonom befahrbar ist.

Die nachfolgend näher geschilderten Ausführungsbeispiele stellen bevorzugte Ausführungsformen der vorliegenden Erfindung dar.

Das Ein- bzw. Durchfahren einer Waschstraße durch ein Kraftfahrzeug erfolgt autonom. Dies bedeutet, dass der Fahrer das Auto verlassen kann und das Kraftfahrzeug, insbesondere ein Personenkraftwagen, vollkommen automatisch durch die Waschstraße hindurchfährt. Alternativ kann der Fahrer auch im Kraftfahrzeug sitzen bleiben und wird automatisch durch die Waschstraße gefahren.

Unter einer Waschstraße wird hier jeder Typ einer Waschanlage verstanden, bei der ein Kraftfahrzeug gewaschen und ggf. getrocknet wird. Hierzu zählen, wie eingangs erwähnt, Waschstraßen, bei denen das Fahrzeug während des Waschvorgangs und ggf. des Trocknungsvorgangs steht, bei denen das Fahrzeug während des Waschvorgangs und/oder Trocknungsvorgangs ständig bewegt wird oder bei denen das Fahrzeug nach dem Waschen lediglich von einer Waschposition in eine Trocknungsposition gefahren wird. Generell lässt sich das erfindungsgemäße Verfahren auch auf andere Waschstraßen anwenden, in denen ein Fahrzeug gefahren werden muss.

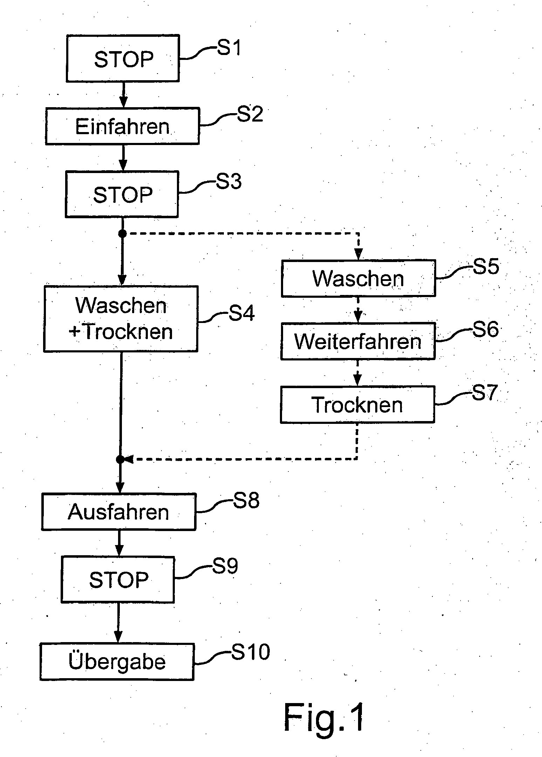

In dem Beispiel von Fig. 1 fährt ein Fahrer das zu waschende Kraftfahrzeug an eine Waschstraße. Optional erkennt das Fahrzeug die Waschstraße selbst und meldet dies dem Fahrer über geeignete akustische oder optische Anzeigeinstrumente im Fahrzeug. Beispielsweise kann das Fahrzeug durch ein Identifikationssignal (Ping) von der Waschstraße über die Identität und/oder die Art der Waschstraße sowie deren exakte Position informiert werden. Das Fahrzeug fährt dann automatisch, teilautomatisch oder manuell zum Eingang der Waschstraße.

Sofern das Vorfahren vor die Waschstraße manuell oder teilautomatisch erfolgt, muss dem Fahrer signalisiert werden, wann ein autonomes Fahren in/an der Waschstraße möglich ist. Sobald dies möglich ist, kann der Fahrer eine Übergabeprozedur starten. Hierzu stoppt er gemäß Schritt S1 von Fig. 1 das Fahrzeug und aktiviert den Autonommodus des Fahrzeugs. Ist das Fahrzeug mit einem manuellen Schaltgetriebe ausgestattet, muss der Fahrer für die Übergabe ggf. in den Leerlauf schalten.

Zur Aktivierung des Autonommodus des Fahrzeugs drückt der Fahrer beispielsweise einen Knopf oder ein anderes Betätigungselement im Fahrzeug oder er gibt ein entsprechendes sprachliches Triggersignal an die Fahrzeugsteuerung.

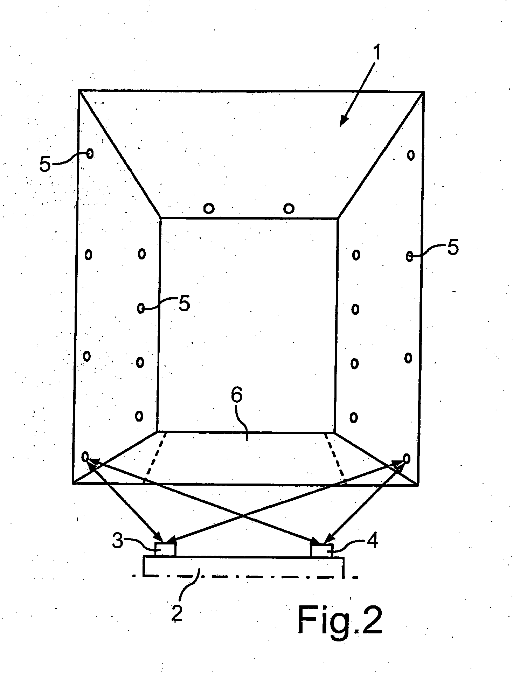

Nach dem Aktivieren des Autonommodus erfolgt gemäß Schritt S2 ein automatisches Einfahren in die Waschstraße. Dies setzt voraus, dass das Fahrzeug die Fahrzeugposition und Fahrzeugorientierung relativ zu dem vorgegebenen Fahrkorridor der Waschstraße vor und während des Einfahrens kennt. Um die Fahrzeugposition und -orientierung zu ermitteln, nutzt das Fahrzeug eine ins Fahrzeug integrierte Sensorik. Dabei kann es sich beispielsweise um die Sensorik eines Parkassistentsystems handeln. Die beiden Größen Fahrzeugposition und Fahrzeugorientierung werden, wie im Zusammenhang mit Fig. 2 näher erläutert wird, durch das Fahrzeug anhand von Orientierungselementen in der Waschstraße ermittelt.

Das Fahrzeug muss nun bis zu einer vorgegebenen Waschpositiön in die Waschstraße einfahren. D. h. das Fahrzeug muss an der Waschposition gemäß Schritt S3 stoppen. Dieses Stoppen erfolgt automatisch, wenn die Fahrzeugsensorik das Erreichen der Waschposition ermittelt.

Die Waschstraße detektiert in üblicher Weise das Erreichen der Waschposition und beginnt mit den Bearbeitungsschritten des Waschens und ggf. des Trocknens des Fahrzeugs gemäß Schritt S4. Alternativ können die Bearbeitungsschritte des Waschens und Trocknens auch manuell gestartet werden.

In dem oben geschilderten Fall erfolgt das Waschen und Trocknen des Fahrzeugs an einer einzigen Position, hier der Waschposition. Fährt der Fahrer sein Fahrzeug jedoch in eine andere Waschstraße mit einer Waschkammer und einer separaten Trocknungskammer, so ist es notwendig, das Fahrzeug nach dem Waschen in die Trocknungskammer weiterzufahren. Dieser andere Typ der Waschstraße wurde dem Fahrzeug ggf. automatisch in dem Identifikationssignal der Waschstraße zu Beginn des autonomen Fahrens bzw. vor dem autonomen Fahren übermittelt. Spezifisch für den Waschstraßentyp wird dann nach dem Stoppen des Fahrzeugs in der Waschposition gemäß Schritt S3 ein Waschen gemäß Schritt S5 durchgeführt. Nach dem letzten Bearbeitungsschritt des Waschens übermittelt die Waschstraße ein Weiterfahrsignal an das Fahrzeug. Ausgelöst durch dieses Weiterfahrsignal startet das Fahrzeug ggf. den Motor neu, legt den entsprechenden Gang ein und fährt gemäß Schritt S6 weiter von der Waschposition in eine Trocknungsposition, d. h. von dem Waschraum in einen Trocknungsraum. Erreicht das Fahrzeug die Trocknungsposition, so schaltet es ggf. wieder in den Leerlauf und stellt den Motor ab. Nun erfolgen seitens der Waschstraße die einzelnen Bearbeitungsschritte des Trocknens gemäß Schritt S7.

Nach den Schritten S4 bzw. S7 ist das Fahrzeug gereinigt und kann die Waschstraße verlassen. Dazu erhält es von der Waschstraße einen Steuerimpuls, d. h. ein Ausfahrsignal. Nach Empfang dieses Ausfahrsignals startet das Fahrzeug den Motor und legt den notwendigen Gang bzw. den entsprechenden Fahrmodus ein. Mit dem Motorstart hat dann ein weiterer Teil des autonomen Fahrens, nämlich das Ausfahren aus der Waschstraße gemäß Schritt S8 begonnen. Das Fahrzeug fährt dabei, wieder durch seine Sensorik gesteuert, automatisch den Korridor der Waschstraße weiter, bis es das Waschstraßengebäude verlassen hat. Die Sensorik des Fahrzeugs stellt fest, dass das Fahrzeug vollkommen aus dem Waschstraßengebäude ausgefahren ist bzw. sich in einer Abholposition außerhalb des Waschstraßengebäudes befindet. In dieser Abholposition wird das Fahrzeug im autonomen Modus automatisch gestoppt, es wird in den Leerlauf geschaltet und ggf. der Motor abgestellt (Schritt S9).

Die Abholposition muss nicht unmittelbar an der Ausfahrt des Waschstraßengebäudes angeordnet sein. Vielmehr kann die Abholposition auch auf einem Warteparkplatz gelegen sein, wobei sie ggf. dynamisch durch das Fahrzeug und die Waschstraßenanlage bestimmt wird. Ein derartiger Warteparkplatz hätte den Vorteil, dass das Fahrzeug nicht unmittelbar nach Verlassen der Waschstraße vom Fahrer abgeholt werden muss. Vielmehr könnte sich der Fahrer beispielsweise in der benachbarten Tankstelle beispielsweise zum Kaffeetrinken aufhalten, während das Fahrzeug vollkommen autonom durch die Waschstraße fährt. Nach beendetem Waschen kann der Fahrer dann beispielsweise mittels eines Bildschirms in der Tankstelle davon unterrichtet werden, dass sein Fahrzeug zur Abholung bereit steht. Alternativ könnte der Fahrer auch auf seinem Mobiltelefon oder einem anderen Mobilgerät eine Nachricht erhalten, dass sein Auto fertig ist. Der Fahrer kann dann bei Gelegenheit sein Fahrzeug abholen.

In jedem Fall muss nach dem autonomen Fahren eine Übergabe,gemäß Schritt S10 an den Fahrer erfolgen. Diese Übergabe erfolgt im Wesentlichen dadurch, dass der Autonommodus ausgeschaltet wird. Dazu ist es je nach Situation notwendig, dass das Fahrzeug automatisch in den Leerlauf schaltet und ggf. den Motor abstellt. Der Fahrer kann dann das Fahrzeug sicher übernehmen.

Alternativ kann die Übergabe gemäß Schritt S10 auch unmittelbar nach dem autonomen Stoppen gemäß Schritt S9 erfolgen, wenn der Fahrer beim Durchfahren der Waschstraße im Fahrzeug sitzengeblieben ist. In diesem Fall kann beispielsweise der Motor weiterlaufen und es wird im Autonommodus lediglich der Leerlauf eingelegt und die Feststellbremse betätigt. Zum manuellen Weiterfahren muss der Fahrer dann lediglich die Feststellbremse lösen und den Gang einlegen.

Fig. 2 zeigt beispielhaft einen Waschraum einer Waschstraße, wobei Waschgeräte nicht dargestellt sind. Ein Fahrzeug 2 will in diesen Waschraum 1 autonom einfahren. Das Fahrzeug 2 besitzt hier symbolisch zwei Sensoren 3, 4 mit denen es seine Fahrzeugposition und Fahrzeugorientierung relativ zu der Waschstraße bzw. einem Fahrkorridor der Waschstraße ermitteln kann. Dazu sind in dem Waschraum 1 mehrere Orientierungselemente 5 fest angeordnet. Anhand dieser Orientierungselemente 5 berechnet das Fahrzeug. 2 einen Fahrkorridor 6. Optional kann der Fahrkorridor 6 auch dreidimensional sein, was für höhere Fahrzeuge von Bedeutung ist.

Im Beispiel von Fig. 2 ist lediglich symbolisch angedeutet, dass mit den Sensoren 3 und 4 jeweils Distanzen zu Orientierungselementen 5 ermittelt werden. Aus diesen Distanzen und der Erkenntnis der Sensorpositionen am Fahrzeug lässt sich dann die Fahrzeugposition und -orientierung ermitteln. Ausgehend von Fahrzeugposition und -orientierung lässt sich dann eine Trajektorie abschätzen, entlang der das Fahrzeug durch die Waschstraße fährt.

Zur Ermittlung der Fahrzeugorientierung und Fahrzeugposition können auch mehr als zwei Orientierungselemente 4 in der Waschstraße benutzt werden. Dabei müssen die Orientierungselemente nicht dauerhaft statisch angeordnet sein. Vielmehr könne sie auch an beweglichen Waschgeräten, oder aber auch an im Boden versenkbaren Säulen angeordnet sein.

Die Sensoren 3, 4 am Fahrzeug 2 sind nicht auf die Anzahl 2 beschränkt. Vielmehr kann es auch ein einzelner Sensor sein, oder es sind drei oder mehr Sensoren. Der oder die Sensoren können auf unterschiedlichen physikalischen Prinzipien beruhen. So können beispielsweise Radarsensören, optische Sensoren, Ultraschallsensoren und dergleichen eingesetzt werden.

In vorteilhafter Weise wird durch das oben geschilderte autonome Fahren in die bzw. durch die Waschstraße der Komfort beim Nutzen eines Fahrzeugs erhöht. Darüber hinaus erhöht das autonome Fahren in einer Waschstraße auch die Sicherheit nicht nur für das Fahrzeug, sondern auch für die Waschstraße selbst.

## Patentansprüche

1. Verfahren zum autonomen Fahren eines Kraftfahrzeugs (2) in einer Waschstraße,
**gekennzeichnet durch**
- Detektieren eines Korridors (6) der Waschstraße,
- Detektieren einer Fahrzeugposition und Fahrzeugorientierung des Kraftfahrzeugs (2) relativ zu dem Korridor (6) der Waschstraße,
- Automatisches Einfahren (S2) des Kraftfahrzeugs (2) in die Waschstraße anhand der Fahrzeugposition und der Fahrzeugorientierung,
- Automatisches Stoppen (S3) des Kraftfahrzeugs in einer Waschposition,
- Empfangen oder Ermitteln eines Endesignals, das ein Ende eines Arbeitsschritts der Waschstraße signalisiert, **durch** das Kraftfahrzeug, und
- Automatisches Ausfahren (S8) des Kraftfahrzeugs aus der Waschstraße ausgelöst **durch** das Endesignal.

2. Verfahren nach Anspruch 1,
das durch Betätigen eines mobilen Endgeräts steuerbar ist.

3. Verfahren nach Anspruch 1 oder 2,
wobei vor dem Detektieren des Korridors (6) der Waschstraße ein Aussenden eines Orientierungssignals durch die Waschstraße erfolgt, anhand dessen das Kraftfahrzeug (2) die Waschstraße automatisch ortet und/oder identifiziert.

4. Verfahren nach einem der vorhergehenden Ansprüche,
wobei das Detektieren des Korridors (6) der Waschstraße anhand von fest platzierten Orientierungselementen (5) in der Waschstraße erfolgt.

5. Verfahren nach einem der vorhergehenden Ansprüche,
wobei zum Detektieren der Fahrzeugposition und Fahrzeugorientierung relativ zu dem Korridor (6) die Sensorik eines Parkassistentsystems des Kraftfahrzeugs verwendet wird.

6. Verfahren nach einem der vorhergehenden Ansprüche,
wobei vor dem automatischen Einfahren (S2) in die Waschstraße dem Fahrer die Möglichkeit des autonomen Fahrens angezeigt wird, so dass er einen entsprechenden Automatikmodus aktivieren kann.

7. Verfahren nach einem der vorhergehenden Ansprüche,
wobei bei dem automatischen Stoppen (S3) des Kraftfahrzeugs (2) in der Waschposition, automatisch das Getriebe des Kraftfahrzeugs in eine Leerlaufstellung gebracht und der Motor des Kraftfahrzeugs ausgeschaltet wird.

8. Verfahren nach einem der vorhergehenden Ansprüche,
wobei das Kraftfahrzeug (2) ein Fahrsignal von der Waschstraße empfängt und dadurch ausgelöst automatisch von der Waschposition in eine andere Bearbeitungsposition fährt.

9. Verfahren nach einem der vorhergehenden Ansprüche,
wobei bei oder nach dem automatischen Ausfahren (S8) aus der Waschstraße eine Nachricht an ein Ausgabegerät zur Information eines Fahrers des Kraftfahrzeugs über dessen Zustand gesendet wird.

10. Kraftfahrzeug zum autonomen Fahren in einer Waschstraße
**gekennzeichnet durch**
- eine Detektoreinrichtung, die einen Korridor (6) der Waschstraße detektiert sowie einer Fahrzeugposition und Fahrzeugorientierung des Kraftfahrzeugs (2) relativ zu dem Korridor (6) der Waschstraße,
- eine Steuereinrichtung, die das Kraftfahrzeug (2) in die Waschstraße anhand der Fahrzeugposition und Fahrzeugorientierung automatisch einfährt sowie das Kraftfahrzeug in einer Waschposition automatisch stoppt (S3) und
- einer Einrichtung, die ein Endesignal emfängt oder ermittelt das ein Ende eines Arbeitsschritts der Waschstraße signalisiert, wobei
- die Steuereinrichtung zum automatischen Ausfahren des Kraftfahrzeugs (2) aus der Waschstraße ausgelöst **durch** das Endesignal ausgebildet ist.

## Claims

1. Method for autonomously driving a motor vehicle (2) in a car wash, **characterised by**:
• detecting a passageway (6) of the car wash,
• detecting a vehicle position and a vehicle orientation of the motor vehicle (2) relative to the passageway (6) of the car wash,
• automatically driving (S2) the motor vehicle (2) into the car wash on the basis of the vehicle position and the vehicle orientation,
• automatically stopping (S3) the motor vehicle in a washing position,
• receiving or detecting, by the motor vehicle, a completion signal, which signals completion of a working step of the car wash, and
• automatically driving (S8) the motor vehicle out of the car wash in response to the completion signal.

2. Method according to claim 1, wherein the method can be controlled by operating a mobile terminal.

3. Method according to either claim 1 or claim 2, wherein, prior to detecting the passageway (6) of the car wash, the car wash transmits an orientation signal, on the basis of which the motor vehicle (2) automatically locates and/or identifies the car wash.

4. Method according to any of the preceding claims, wherein the passageway (6) of the car wash is detected on the basis of orientation elements (5) which are in a fixed position in the car wash.

5. Method according to any of the preceding claims, wherein the vehicle position and the vehicle orientation relative to the passageway (6) are detected using the sensor system of a parking assist system of the motor vehicle.

6. Method according to any of the preceding claims, wherein the option of autonomous driving is indicated to the driver prior to automatically driving (S2) into the car wash, thereby allowing the driver to activate an appropriate automatic mode.

7. Method according to any of the preceding claims, wherein, when the motor vehicle (2) automatically stops (S3) in the washing position, the transmission of the motor vehicle is automatically shifted into neutral, and the engine of the motor vehicle is switched off.

8. Method according to any of the preceding claims, wherein the motor vehicle (2) receives a go-ahead signal from the car wash, the go-ahead signal causing the motor vehicle to automatically move from the washing position into a different operating position.

9. Method according to any of the preceding claims, wherein, while or after automatically driving (S8) out of the car wash, a message is transmitted to an output device to inform a driver of the motor vehicle about the state thereof.

10. Motor vehicle for autonomous driving in a car wash, **characterised by**:
• a detector which detects a passageway (6) of the car wash and a vehicle position and a vehicle orientation of the motor vehicle (2) relative to the passageway (6) of the car wash,
• a control means which automatically drives the motor vehicle (2) into the car wash on the basis of the detected vehicle position and vehicle orientation and automatically stops (S3) the motor vehicle in a washing position, and
• a means which receives or detects a completion signal, which signals completion of a working step of the car wash,
• the control means being configured to automatically drive the motor vehicle (2) out of the car wash in response to the completion signal.

## Revendications

1. Procédé de conduite autonome d'un véhicule automobile (2) dans une voie de lavage,
**caractérisé par**
- la détection d'un couloir (6) de la voie de lavage,
- la détection d'une position de véhicule et d'une orientation de véhicule du véhicule automobile (2) par rapport au couloir (6) de la voie de lavage,
- l'avancée automatique (S2) du véhicule automobile (2) dans la voie de lavage à l'aide de la position de véhicule et de l'orientation de véhicule,
- l'arrêt automatique (S3) du véhicule automobile dans une position de lavage,
- la réception ou la détermination d'un signal de fin, qui signale une fin d'une étape de travail de la voie de lavage, par le véhicule automobile, et
- la sortie automatique (S8) du véhicule automobile hors de la voie de lavage, déclenchée par le signal de fin.

2. Procédé selon la revendication 1, qui peut être commandé en actionnant un terminal mobile.

3. Procédé selon la revendication 1 ou 2, selon lequel on effectue, avant la détection du couloir (6) de la voie de lavage, une émission d'un signal d'orientation par la voie de lavage, signal d'orientation à l'aide duquel le véhicule automobile (2) localise et/ou identifie automatiquement la voie de lavage.

4. Procédé selon l'une des revendications précédentes, selon lequel la détection du couloir (6) de la voie de lavage s'effectue à l'aide d'éléments d'orientation (5) installés de manière fixe dans la voie de lavage.

5. Procédé selon l'une des revendications précédentes, selon lequel, pour la détection de la position de véhicule et de l'orientation de véhicule par rapport au couloir (6), on utilise le dispositif de capteurs d'un système d'aide au stationnement du véhicule automobile.

6. Procédé selon l'une des revendications précédentes, selon lequel, avant l'avancée automatique (S2) dans la voie de lavage, on indique par affichage au conducteur la possibilité de la conduite autonome de telle sorte que ledit conducteur peut activer un mode automatique correspondant.

7. Procédé selon l'une des revendications précédentes, selon lequel, lors de l'arrêt automatique (S3) du véhicule automobile (2) dans la position de lavage, la boîte de vitesses du véhicule automobile est mise automatiquement au point mort et le moteur du véhicule automobile est automatiquement arrêté.

8. Procédé selon l'une des revendications précédentes, selon lequel le véhicule automobile (2) reçoit un signal d'avance en provenance de la voie de lavage et, suite à ce déclenchement, avance automatiquement de la position de lavage à une autre position de travail.

9. Procédé selon l'une des revendications précédentes, selon lequel, pendant ou après la sortie automatique (S8) hors de la voie de lavage, un message est envoyé à un appareil de sortie pour informer un conducteur du véhicule automobile de l'état de celui-ci.

10. Véhicule automobile pour la conduite autonome dans une voie de lavage,
**caractérisé par**
- un dispositif de détection qui détecte un couloir (6) de la voie de lavage ainsi qu'une position de véhicule et une orientation de véhicule du véhicule automobile (2) par rapport au couloir (6) de la voie de lavage,
- un dispositif de commande qui fait avancer automatiquement le véhicule automobile (2) dans la voie de lavage à l'aide de la position de véhicule et de l'orientation de véhicule et qui arrête automatiquement (S3) le véhicule automobile dans une position de lavage et
- un dispositif qui reçoit ou détermine un signal de fin qui signale une fin d'une étape de travail de la voie de lavage,
- le dispositif de commande étant conçu pour la sortie automatique du véhicule automobile (2) hors de la voie de lavage, sortie déclenchée par le signal de fin.
